# EUROPÄISCHE PATENTSCHRIFT

(11) **EP 1 680 254 B1**
(45) Veröffentlichungstag und Bekanntmachung des Hinweises auf die Patenterteilung: **24.01.2007**
(21) Anmeldenummer: 04790710.0
(22) Anmeldetag: 21.10.2004
(51) Int. Cl.: B23K 20/10, B06B 3/00

(54) **WERKZEUG FÜR EINE ULTRASCHALLSCHWEISSVORRICHTUNG MIT EINER VERSTEIFUNG ZUR REDUZIERUNG DER AUSLENKUNG DER WERKZEUGSARBEITSFLÄCHE**
TOOL FOR AN ULTRASOUND WELDING DEVICE COMPRISING A REINFORCING ELEMENT FOR REDUCING THE DEVIATION OF THE WORKING SURFACE OF THE TOOL
OUTIL DESTINE A UN DISPOSITIF DE SOUDAGE PAR ULTRASONS COMPORTANT UN RENFORCEMENT DESTINE A REDUIRE LA DEVIATION DE LA SURFACE DE TRAVAIL DE L'OUTIL

(30) Priorität: 21.10.2003 DE 10349380
(43) Veröffentlichungstag der Anmeldung: 19.07.2006
(73) Patentinhaber: SCHUNK Ultraschalltechnik GmbH, D-35435 Wettenberg (DE)
(72) Erfinder: STROH, Dieter, 35435 Wettenberg (DE); DIETERLE, Horst, 35096 Niederweimar (DE)
(74) Vertreter: Stoffregen, Hans-Herbert
(86) Internationale Anmeldenummer: PCT/EP2004/011904
(87) Internationale Veröffentlichungsnummer: WO 2005/039816

(56) Entgegenhaltungen:
- WO-A-02/43915
- FR-A- 1 464 551
- US-A- 4 074 152

## Beschreibung

Die Erfindung bezieht sich auf ein Werkzeug für eine Ultraschallschweißvorrichtung in Form einer Ultraschallschwingungen übertragenden Sonotrode mit zumindest einer Arbeitsfläche zum Verschweißen von Metallen mit in Richtung Sonotrodenlängsachse verlaufenden Ultraschallschwingungen, wobei die Sonotrode oder ein Sonotrodenkopf dieser eine Stirnfläche aufweist, die senkrecht oder im Wesentlichen senkrecht zu der zumindest einen Arbeitsfläche verläuft (siehe, z.B., WO-A-02/43915).

Beim Fügen von Werkstoffen mit Ultraschall wird die zum Schweißen benötigte Energie in Form von mechanischen Schwingungen in das Schweißgut eingebracht, wobei das Werkzeug, das auch als Sonotrode bezeichnet wird, an das ihm zugewandte Fügeteil angekoppelt wird und dieses bewegt. Gleichzeitig werden die Fügeteile durch eine statische Schweißkraft aufeinander gepresst. Durch das Zusammenwirken der statischen und dynamischen Kräfte erfolgt ein Verschweißen der Fügeteile, ohne dass es weiterer Zusatzwerkstoffe bedarf.

Mittels Ultraschall können sowohl Kunststoffe als auch Metalle geschweißt werden. Dabei werden beim Ultraschallschweißen von Metallen die mechanischen Schwingungen parallel zur Fügefläche ausgerichtet. Es kommt zu einer komplexen Beziehung zwischen statischer Kraft, den oszillierenden Scherkräften und einem moderaten Temperaturanstieg in der Schweißzone. Hierzu werden die Werkstücke zwischen der schwingenden Sonotrode und einer statischen Gegenelektrode angeordnet, die mehrteilig ausgebildet sein kann, um mit der Sonotrode, d. h. Arbeitsfläche deren Kopfes einen Verdichtungsraum zu begrenzen. Dieser kann nach der Lehre der EP-B-0 143 936 oder der DE-C-35 08 122 in zwei senkrecht zueinander verlaufenden Richtungen, insbesondere Höhe und Breite verstellbar ausgebildet sein. Hierdurch ergibt sich ein Anpassen an Querschnitte von z. B. zu verschweißenden Leitern.

Um reproduzierbare Schweißergebnisse hoher Güte zu erzielen, sollte die Auslenkung der Sonotrode vorwiegend allein in deren Längsrichtung, also in Richtung der Ultraschalischwingung erfolgen, ohne dass eine Auslenkung senkrecht hierzu im merklichen Umfang erfolgt.

Die bekannten Sonotroden weisen die Arbeitsfläche begrenzende Stirnflächen auf. Konstruktionsbedingt erfolgt eine hohe Auslenkung der Arbeitsfläche senkrecht zur Sonotrodenlängsachse im Verhältnis zur Auslenkung in Richtung der Sonoirodenlängsachse. Hierdurch ergibt sich der Nachteil, dass die Arbeitsfläche geneigt zur Längsachse der Sonotrode verlaufen kann, so dass sich ein Spalt zwischen der Arbeitsfläche und den parallel zur Längsachse der Sonotrode verlaufenden zu verfügenden Teile ausbilden kann.

Eine Sonotrode der eingangs genannten Art ist der WO-A-02/43915 zu entnehmen. Um die Arbeitsflächen auszutauschen, sind diese Abschnitte von Arbeitsteilen, die lösbar mit der Sonotrode verbindbar sind.

Aus der FR-A-1 464 551 ist eine Ultraschallschweißvorrichtung zu entnehmen, mit der Biegeschwingungen erzeugt werden. Hierzu verläuft ein Biegeschwingerelement, an dessen Ende eine Arbeitsfläche verläuft, vorzugsweise im rechten Winkel zu einem Schwingerelement, auf das unmittelbar Ultraschallschwingungen übertragen werden.

Um Flüssigkeit zu zerstäuben, sieht die US-A-4 074 152 die Ultraschallschwingungserregung eines Hohlzylinderelementes vor, das mit einem Schwingungsamplitudenverstärker formschlüssig verbunden ist. Hierzu ragt von dem Hohlzylinderelement ein Vorsprung ab, der in eine entsprechend angepasste Ausnehmung des Amplitudenverstärkers eingreift.

Der vorliegenden Erfindung liegt das Problem zu Grunde, eine Sonotrode der eingangs genannten Art so weiterzubilden, dass die Schwingungsform der Ultraschallschwingung optimiert wird.

Zur Lösung des Problems sieht die Erfindung im Wesentlichen vor, dass zur Reduzierung einer Auslenkung der zumindest einen Arbeitsfläche senkrecht zur Sonotrodenlängsachse die Stirnfläche der Sonotrode oder des Sonotrodenkopfes oder dessen Rückseite zumindest eine Versteifung aufweist.

Die Versteifung kann dabei als Rippe ausgebildet sein. Dabei kann die Versteifung vom Rand der Sonotrode bzw. deren Kopfes ansteigend in Richtung Sonotrodenmittelachse ausgebildet sein. Die Versteifung kann z. B. im Sonotrodenlängsachsenschnitt eine dreieckförmige Geometrie aufweisen.

Insbesondere ist vorgesehen, dass die Versteifung linien- oder wulstförmig ausgebildet ist und senkrecht zur Arbeitsfläche verläuft. Die Versteifung kann des Weiteren insbesondere über die gesamte oder im Wesentlichen die gesamte Stirnfläche der Sonotrode bzw. deren Kopfes vorstehen. Bevorzugterweise ist die Versteifung symmetrisch zu einer Symmetrieebene ausgebildet, in der die Sonotrodenlängsachse verläuft. Andere Geometrien sind gleichfalls möglich.

Bevorzugterweise ist die Sonotrode derart versteift, dass bei Ultraschallerregung die Auslenkung a_{z} der Sonotrode in deren Längsachsenrichtung sich zur Auslenkung ay senkrecht zur Arbeitsfläche verhält wie 3 ≤ a_{z} / a_{y} ≤ 20.

Durch die erfindungsgemäße Lehre wird die Sonotrode bzw. deren die Arbeitsfläche aufweisender Sonotrodenkopf versteift, wodurch die Schwingform der Sonotrode derart positiv beeinflusst wird, dass die Auslenkung senkrecht zur Sonotrodenlängsachse vermindert und die Schwingung in Längsrichtung stärker überwiegt.

Durch die Versteifung des Kopfes wird die Neigung der Arbeitsfläche deutlich reduziert und das Verhältnis von Auslenkung in Längsachsenrichtung zur Auslenkung senkrecht zur Längsachsenrichtung erhöht.

Erfolgt die Gestaltung der Versteifung vorzugsweise durch eine Rippe, die zur Sonotrodenlängsachse hin dicker wird, so sind andere Geometrien gleichfalls möglich. Die Versteifungsrippe kann sowohl über die ganze Breite der Sonotrode ausgebildet sein oder nur über einen Teil. Die Kontur der Versteifungsrippe kann im Schnitt durch sich schneidende Geraden gebildet sein oder eine sich stetig ändernde Kurve sein, die in ihrem Maximum von der Sonotrodenlängsachse geschnitten wird.

Des Weiteren sollte der Überstand der Versteifung über der Stirnfläche in Längsrichtung der Sonotrode zwischen 3 mm und 25 mm, vorzugsweise zwischen 5 mm und 15 mm betragen. Bevorzugte Werte liegen bei maximal 10 mm. Hierdurch ergibt sich der Vorteil, dass eine entsprechend ausgebildete Sonotrode auch in bereits im Einsatz befindliche Ultraschallschweißvorrichtungen einbaubar ist.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmeriden bevorzugten Ausfuhrungsformen.

Es zeigen:
- Fig. 1: eine Priraipdarstellung (Finite Elementberechnung) einer Sonotrode nach dem Stand der Technik,
- Fig. 2: eine erste Ausführungsform einer Sonotrode nach der erfindungsgemäßen Lehre,
- Fig. 3: eine Vorderansicht der Sonotrode gemäß Fig. 2,
- Fig. 4: eine zweite Ausführungsform einer Sonotrode nach der erfindungsgemäßen Lehre und
- Fig. 5: eine Prinzipdarstellung (Finite Elementberechnung) einer Sonotrode nach der erfindungsgemäßen Lehre.

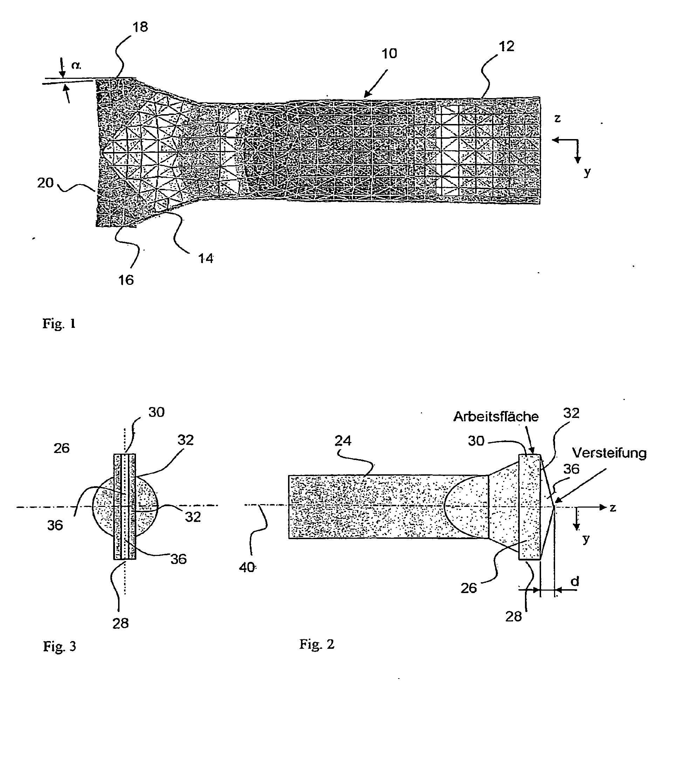

In Fig. 1 ist eine Sonotrode 10 bestimmt für eine Ultraschallschweißvorrichtung prinzipiell dargestellt, die zum Verschweißen von Metall bestimmt ist. Die Darstellung ist eine Abbildung einer Finite Elementberechnung. Die Sonotrode 10 besteht aus einem Basiskörper 12 mit von diesem ausgehenden Kopf 14, der seinerseits Arbeitsflächen 16 und 18 aufweist, die parallel zur Längsachse z der Sonotrode 10 bei nicht erregter Sonotrode 10 verlaufen.

Um Metallteile zu verschweißen, wird die Sonotrode 10 mittels eines Konverters und gegebenenfalls zwischen diesem und der Sonotrode 10 angeordnetem Booster in Ultraschallschwingungen erregt, wodurch eine Auslenkung der Sonotrode 10 in z-Richtung erfolgt. Zum Verschweißen wird im Ausführungsbeispiel die Arbeitsfläche 16 auf zu verschweißende Metallteile gedrückt, die ihrerseits auf einer Gegenelektrode, die auch als Amboss bezeichnet wird, abgestützt sind. Gegebenenfalls kann die Arbeitsfläche 16 einen Verdichtungsraum begrenzen, dessen verbleibenden Begrenzungsflächen von einer mehrteiligen Gegenelektrode gebildet werden. Insoweit wird auf hinlänglich bekannte Ultraschallschweißvorrichtungen verwiesen, von denen z. B. eine der DE-C-35 08 122 zu entnehmen ist, auf deren Offenbarung ausdrücklich Bezug genommen wird.

Die Arbeitsflächen 16, 18 werden von einer Stirnfläche 20 des Sonotrodenkopfes 14 begrenzt, die senkrecht zu den Arbeitsflächen 16, 18 bei nicht erregter Sonotrode 10 verläuft. Im Ausführungsbeispiel verlaufen die Arbeitsflächen 16, 18 senkrecht oder im Wesentlichen senkrecht zur y-Achse, entlang der die Sonotrode oder ein der Sonotrode zugeordneter Amboss beim Verschweißen verstellt wird.

Beim Schweißen hat sich nun herausgestellt, dass die Sonotrode 10 nicht nur in Sonotrodenlängsachsenrichtung z, sondern auch senkrecht zu dieser, also in y-Richtung ausgelenkt wird, wodurch eine Neigung der Arbeitsfläche 16, 18 (Winkel α) erfolgt. Hierdurch wird die Schweißgüte beeinflusst. Auch kann in Abhängigkeit von der Auslenkung des Sonotrodenkopfes 14 in y-Richtung die Reproduzierbarkeit der Schweißergebnisse beeinträchtigt werden.

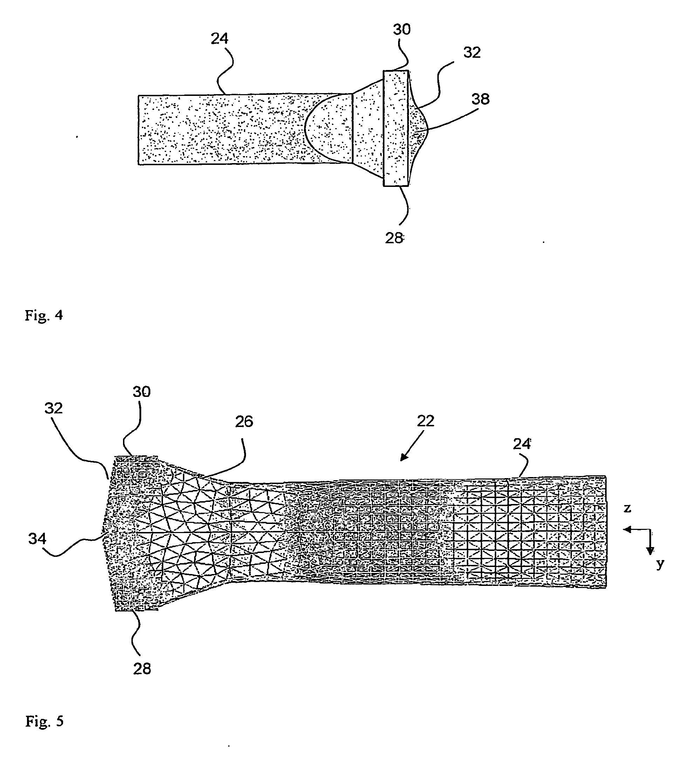

Erfindungsgemäß ist nun vorgesehen, dass eine in Fig. 5 prinzipiell dargestellte Sonotrode 22 mit zylindrischem Basiskörper 24, Sonotrodenkopf 26 und Arbeitsflächen 28, 30 von ihrer Stirnfläche 32 ausgehend eine Versteifung 34 aufweist, wodurch die Auslenkung der Sonotrode 22 in y-Richtung reduziert wird. Durch die Versteifung 34 wird die Deformation des Sonotrodenkopfes 26 in y-Richtung verringert bzw. eingeschränkt, so dass die Eigenschwingform der Sonotrode 22 verbessert wird.

Der Sonotrodenkopf 26 setzt sich in bekannter Weise aus einem trapezoid- oder pyramidenstumpf- oder trompetenförmigen von dem Basiskörper 24 ausgehenden inneren Abschnitt und einem von diesem ausgehenden quader- oder balkenförmigen äußerem Abschnitt zusammen, der die Arbeitsflächen 28, 30 aufweist. Die entsprechenden Geometrien ergeben sich auch aus einem Vergleich der Fig. 2 und 3. Ferner verlaufen entsprechend der Erläuterungen zu Fig. 1 die Arbeitsflächen 28, 30 senkrecht zu der y-Achse.

Durch die erfindungsgemäße Lehre reduziert sich das Verhältnis der Neigung der Arbeitsfläche 28, 30 zur Sonotrodenlängsachse (40), also zur z-Achse, und das Verhältnis von Auslenkung der Sonotrode 22 in z-Richtung zur Auslenkung senkrecht zur z-Achse, also in Richtung der y-Achse, wird erhöht.

Wie insbesondere den Fig. 2 bis 4 zu entnehmen ist, in denen grundsätzlich für Elemente der Fig. 5 gleiche Bezugszeichen benutzt werden, kann die prinzipiell der Fig. 5 zu entnehmende Versteifung 34 derart realisiert werden, dass von der Stirnfläche 32 des Sonotrodenkopfes 26 eine in Längsrichtung des Sonotrodenkopfes 26 über der Stirnfläche 32 vorstehende Rippe abragt, die im Schnitt eine Dreieck-Geometrie (Fig. 2, 3) oder eine gewölbte Geometrie (Fig. 4) aufweist. Die entsprechenden Versteifungen sind mit den Bezugszeichen 36 und 38 gekennzeichnet. Dabei ist insbesondere den Seitenansichten gemäß den Fig. 2 und 4 zu entnehmen, dass die jeweilige Versteifung 36, 38 von der Arbeitsfläche 28, 30 ausgehend ansteigend über der Stirnfläche 32 vorsteht, wobei die maximale Erstreckung in z-Richtung im Schnittpunkt mit der Mittelachse 40 der Sonotrode 22, d. h. dessen Basiskörpers 24 liegt.

Der maximale Überstand d der Versteifung 34, 36 über der Stirnfläche 32 des Sonotrodenkopfes 26 sollte 15 mm betragen, gleichwenn auch andere Dimensionierungen je nach Ausbildung der Sonotrode in Frage kommen. Ein Überstand d von maximal 15 mm hat jedoch den Vorteil, dass entsprechende Sonotroden in bereits im Einsatz befindliche Ultraschallschweißvorrichtungen einbaubar sind.

Insbesondere sollte die Versteifung 34, 36, 38 derart ausgelegt sein, dass die Auslenkung a_{z} der Sonotrode 22 in z-Richtung sich verhält zur Auslenkung a_{y} der Sonotrode 22 in y-Richtung wie 3 ≤ a_{z} / a_{y} ≤ 20.

Erstreckt sich die Versteifung 34, 36, 38 in den Ausführungsbeispielen über die gesamte Höhe des Sonotrodenkopfes 26, so besteht auch die Möglichkeit, dass die Versteifung zum Beispiel im Mittenbereich der Stirnfläche 32, also beabstandet von den Arbeitsflächen 28, 30 beginnend verläuft. Andere Geometrien sind gleichfalls möglich.

Ferner kann auch die Rückseite des äußeren die Arbeitsflächen 28, 30 aufweisenden Abschnitts des Sonotrodenkopfes 26 eine oder mehrere Versteifungen aufweisen, wobei ggf. die stirnseitig verlaufende Versteifung wegfällt. Verläuft die Versteifung auf der Rückseite, so ist die Flächenerstreckung des inneren Abschnitts des Sonotrodenkopfes kleiner als die Flächenerstreckung des äußeren Abschnitts, der die zumindest eine Arbeitsfläche aufweist.

Auch ist die erfindungsgemäße Lehre selbstverständlich für Sonotroden mit Sonotrodenköpfen geeignet, die keine quader- oder balkenförmige Geometrie, sondern eine Mehreck-Geometrie, wie Sechseck-Geomefrie aufweisen, deren Ecken z. B. gleichmäßig verteilt auf einem Kreis liegen, also eine prinzipielle Geometrie zeigen, wie diese z. B. der DE-A-33 35 254 oder der EP-A-0 083 707 zu entnehmen ist.

## Patentansprüche

1. Werkzeug für eine Ultraschallschweißvorrichtung in Form einer Ultraschallschwingungen übertragenden Sonotrode (22) mit zumindest einer Arbeitsfläche (28, 30) zum Verschweißen von Metallen mit in Richtung Sonotrodenlängsachse (40) verlaufenden Ultraschallschwingungen, wobei die Sonotrode oder ein Sonotrodenkopf (26) dieser eine Stirnfläche (32) aufweist, die senkrecht oder im Wesentlichen senkrecht zu der zumindest einen Arbeitsfläche verläuft,
**dadurch gekennzeichnet,**
**dass** zur Reduzierung einer Auslenkung der zumindest einen Arbeitsfläche (28, 30) senkrecht zur Sonotrodenlängsachse (40) die Stirnfläche (32) der Sonotrode (22) oder des Sonotrodenkopfes (26) oder dessen Rückseite zumindest eine Versteifung (34, 36, 38) aufweist.

2. Werkzeug nach Anspruch 1,
**dadurch gekennzeichnet,**
**dass** die Versteifung (34, 36, 38) eine Rippe ist.

3. Werkzeug nach einem der vorhergehenden Ansprüche,
**dadurch gekennzeichnet,**
**dass** die Versteifung (36) im Sonotrodenlängsachsenschnitt eine dreieckförmige Geometrie aufweist.

4. Werkzeug nach einem der vorhergehenden Ansprüche,
**dadurch gekennzeichnet,**
**dass** die Versteifung (36, 38) vom Umfangsrand der Stirnfläche (32) bzw. der Arbeitsfläche (28, 30) der Sonotrode (22) ausgehend in Richtung der Sonotrodenlängsachse (40) zunehmend über der Stirnfläche (32) vorsteht.

5. Werkzeug nach einem der vorhergehenden Ansprüche,
**dadurch gekennzeichnet,**
**dass** die Versteifung (36, 38) insbesondere senkrecht zu der Arbeitsfläche (28, 30) verläuft.

6. Werkzeug nach einem der vorhergehenden Ansprüche,
**dadurch gekennzeichnet,**
**dass** die Versteifung (36, 38) linienförmig ausgebildet ist.

7. Werkzeug nach einem der vorhergehenden Ansprüche,
**dadurch gekennzeichnet,**
**dass** von der gesamten oder im Wesentlichen gesamten Stirnfläche (32) die Versieifung (36, 38) vorsieht.

8. Werkzeug nach einem der vorhergehenden Ansprüche,
**dadurch gekennzeichnet,**
**dass** die Versteifung (36, 38) symmetrisch zu einer Symmetrieebene ausgebildet ist, in der die Sonotrodenlängsachse (40) verläuft.

9. Werkzeug nach einem der vorhergehenden Ansprüche 1 bis 5 und 7-8,
**dadurch gekennzeichnet,**
**dass** die Versteifung (38) wulstartig bzw. als ein linienförmiger Wulst ausgebildet ist.

10. Werkzeug nach einem der vorhergehenden Ansprüche,
**dadurch gekennzeichnet,**
**dass** die Sonotrode (22) derart versteift ist, dass bei Ultraschallerregung sich Auslenkung a_{z} der Sonotrode in Richtung deren Längsachse (40) zur Auslenkung a_{y} senkrecht zur Arbeitsfläche (28, 30) verhält wie 3 ≤ a_{z} / a_{y} ≤ 20.

11. Werkzeug nach einem der vorhergehenden Ansprüche,
**dadurch gekennzeichnet,**
**dass** maximale Erstreckung d der Versteifung (36, 38) über der Stirnfläche (32) sich beläuft auf 3 mm ≤ d ≤ 25 mm, vorzugsweise 5 mm ≤ d ≤ 15 mm.

12. Werkzeug nach einem der vorhergehenden Ansprüche,
**dadurch gekennzeichnet,**
**dass** die Erstreckung d der Versteifung (36, 38) über der Stirnfläche (32) maximal 10 mm beträgt.

## Claims

1. Tool for an ultrasonic welding device in the form of a sonotrode (22), which transfers ultrasonic oscillations with at least one working surface (28, 30) for welding metals with ultrasonic oscillations running in the direction of sonotrode's longitudinal axis (40), whereby the sonotrode or its sonotrode head (26) exhibits a front surface (32), which runs perpendicular or essentially perpendicular to the at least one working surface,
**characterized in**
**that** for reducing a deflection of the at least one working surface (28, 30) perpendicular to the sonotrode's longitudinal axis (40), the front surface (32) of the sonotrode (22) or of the sonotrode head (26) or of its backside exhibits at least one reinforcement (34, 36, 38).

2. Tool according to Claim 1,
**characterized in**
**that** the reinforcement (34, 36, 38) is a rib

3. Tool according to one of the preceding claims,
**characterized in**
**that** the reinforcement (36) exhibits a triangle geometry in the section of the sonotrode's longitudinal axis.

4. Tool according to one of the preceding claims,
**characterized in**
**that** the reinforcement (36, 38) protrudes from the peripheral edge of the front surface (32) and of the working surface (28, 30), respectively, of the sonotrode (22) starting in the direction of the sonotrode's longitudinal axis (40) incrementally over the front surface (32).

5. Tool according to one of the preceding claims,
**characterized in**
**that** the reinforcement (36, 38), in particular, runs perpendicular to the working surface (28, 30).

6. Tool according to one of the preceding claims,
**characterized in**
**that** the reinforcement (36, 38) is designed linear.

7. Tool according to one of the preceding claims,
**characterized in**
**that** the reinforcement (36, 38) projects from the entire, or essentially entire, front surface (32).

8. Tool according to one of the preceding claims,
**characterized in**
**that** the reinforcement (36, 38) is designed symmetrical to a symmetry plane, in which the sonotrode's longitudinal axis (40) runs.

9. Tool according to one of the preceding claims 1 to 5 and 7, 8,
**characterized in**
**that** the reinforcement (38) is designed beaded-like and as a linear bead, respectively.

10. Tool according to one of the preceding claims,
**characterized in**
**that** the sonotrode (22) is reinforced in such a way that, with ultrasonic excitation, the ratio of deflection a_{z} of the sonotrode towards its longitudinal axis (40) and deflection ay perpendicular to the working surface (28, 30) is 3 ≤ a_{z}/ a_{y} ≤ 20.

11. Tool according to one of the preceding claims,
**characterized in**
**that** the maximal extension d of the reinforcement (36, 38), over the front surface (32), is 3 mm ≤ d ≤ 25 mm, preferably 5 mm ≤ d ≤ 15 mm.

12. Tool according to one of the preceding claims,
**characterized in**
**that** the extension d of the reinforcement (36, 38), over the front surface (32), is maximally 10 mm.

## Revendications

1. Outil pour un dispositif de soudage par ultrasons, formé par une sonotrode (22) transmettant des vibrations ultrasonores, avec au moins une surface de travail (28, 30) destinée à souder des métaux avec des vibrations ultrasonores se propageant dans le sens de l'axe longitudinal (40) de la sonotrode, sachant que la sonotrode ou une tête de celle-ci (26) présente une face frontale (32) perpendiculaire ou pour l'essentiel perpendiculaire à l'au moins une surface de travail,
**caractérisé en ce que**,
par réduction d'une déformation de l'au moins une surface de travail (28, 30) perpendiculaire à l'axe longitudinal (40) de la sonotrode, la face frontale (32) de la sonotrode (22) ou de la tête de sonotrode (26) ou sa face arrière présente au moins un renforcement (34, 36, 38).

2. Outil selon la revendication 1,
**caractérisé en ce que**
le renforcement (34, 36, 38) est une nervure.

3. Outil selon l'une des revendications précédentes,
**caractérisé en ce que**
le renforcement (36) présente une géométrie triangulaire dans une coupe selon l'axe longitudinal de la sonotrode,

4. Outil selon l'une des revendications précédentes,
**caractérisé en ce que**,
en partant du bord circonférentiel de la face frontale (32) ou de la surface de travail (28, 30) de la sonotrode (22), le renforcement (36, 38) fait de plus en plus saillie sur la face frontale (32) en direction de l'axe longitudinal (40) de la sonotrode.

5. Outil selon l'une des revendications précédentes,
**caractérisé en ce que**
le renforcement (36, 38) s'étend en particulier perpendiculairement à la surface de travail (28, 30).

6. Outil selon l'une des revendications précédentes,
**caractérisé en ce que**,
le renforcement (36, 38) a une forme linéaire.

7. Outil selon l'une des revendications précédentes,
**caractérisé en ce que**
le renforcement (36, 38) fait saillie sur la totalité ou pour l'essentiel sur la totalité de la face frontale (32).

8. Outil selon l'une des revendications précédentes,
**caractérisé en ce que**
le renforcement (36, 38) est formé symétriquement par rapport à un plan de symétrie dans lequel s'étend l'axe longitudinal (40) de la sonotrode.

9. Outil selon l'une des revendications 1 à 5 et 7 et 8 précédentes,
**caractérisé en ce que**
le renforcement (38) est formé par un bourrelet ou par un bourrelet linéaire.

10. Outil selon l'une des revendications précédentes,
**caractérisé en ce que**
la sonotrode (22) est renforcée de telle manière qu'en cas d'excitation par ultrasons, la déformation a_{z} de la sonotrode dans le sens de son axe longitudinal (40) et la déformation a_{y} perpendiculairement à la surface de travail (28, 30) soient telles que 3 ≤ az / ay ≤ 20.

11. Outil selon l'une des revendications précédentes,
**caractérisé en ce que**
l'extension maximale d du renforcement (36, 38) sur la face frontale (32) s'élève à 3 mm ≤ d ≤ 15 mm.

12. Outil selon l'une des revendications précédentes,
**caractérisé en ce que**
l'extension d du renforcement (36, 38) sur la face frontale (32) s'élève à 10 mm au maximum.
